Europäisches Patentamt

(19) European Patent Office

Office européen des brevets

(11) Publication number: **0 003 631**
**B1**

(12) **EUROPEAN PATENT SPECIFICATION**

(45) Date of publication of patent specification: **16.12.81**

(51) Int. Cl.³: **G 03 B 37/06, G 03 B 27/46**

(21) Application number: **79200075.4**

(22) Date of filing: **12.02.79**

(54) Method, means and product of recording, reducing, enlarging and/or reproducing anamorphic images.

(30) Priority: **10.02.78 DE 2805528**

(43) Date of publication of application:
**22.08.79 Bulletin 79/17**

(45) Publication of the grant of the European patent:
**16.12.81 Bulletin 81/50**

(84) Designated Contracting States:
**BE FR IT**

(56) References cited:
**DE - B - 1 103 755**
**US - A - 2 898 804**

(73) Proprietor: **Van Tetering, Antonius Maria Adrianus Henricus, Dr.**
**Nieuwe Gracht 7**
**NL-2011 NB Haarlem (NL)**

(72) Inventor: **Van Tetering, Antonius Maria Adrianus Henricus, Dr.**
**Nieuwe Gracht 7**
**NL-2011 NB Haarlem (NL)**

Courier Press, Leamington Spa, England.

# Method, means and product of recording, reducing, enlarging and/or reproducing anamorphic images

The invention relates to a method of recording anamorphic images on a carrier material such as cine film by filming with a camera or by reduction printing from film stock of larger size, or by enlargement onto larger film stock.

Anamorphic images are produced by anamorphic systems composed of lenses, mirrors or prisms used for example in wide-screen cinematography for compressing an elongate image onto standard film stock. During projection onto a cinema screen, the process is reversed, i.e. the anamorphic images are expanded by an anamorphic system to restore them to their undistorted original proportions. Carrier material with anamorphic image may be copied, reduced or enlarged.

An important consideration is the image size, both for the recording (filming) and reproduction (projection) of cine film. The image areas of standard, that is to say of non-anamorphic, 35mm, 16mm and Super 8mm cameras, i.e. the film gates defining the camera apertures, have been standardized by the American National Standard Institute (ANSI) in their Specifications PH 22.59—1974, PH 22.7—1976 and PH 22.157—1971. Similarly, the projectable image areas or film gates of standard film projectors are standardized in ANSI PH 22.58—1969, PH 22.8—1969 and PH 22.154—1976. These standard image sizes have been internationally adopted by the manufacturers of cine film, cine cameras and cine projectors.

For anamorphic recording with a compression ratio of 2:1 and anamorphic reproduction with an aspect ratio of 2.35:1, there has been standardization only in the case of 35mm cine film for recording and 35mm and 70mm cine film for projection. Again, for reducing anamorphic images there is a standard only in the case in printer image areas or film gates from 35mm to 16mm positive and duplicate negative prints, namely in SMPTE—RP 65—1976 (Society of Motion Picture and Television Engineers, Recommended Practice) which prescribes a maximum image reduction ratio of 2.15:1.

It follows, that many aspects dealing with anamorphic image dimensions have so far not been established, standardized or prescribed, particularly camera and projector film gates for 16mm and Super 8 cine film, reduction printing from 35mm to 16mm and/or Super 8, for prints or duplicate negatives, enlargement ratios for 16mm or 35mm from Super 8 and for 35mm from 16mm, and reduction ratios other than for 16mm from 35mm. Consequently, cine film laboratories all over the world are not surprisingly reducing standard as well as anamorphic originals or duplicating negatives of 35mm or more onto 16mm film irrespective of their different image heights ($16.00mm_{-0.00}^{+0.50}$ standard; $18.59mm_{-0.00}^{+0.20}$ anamorphic) but only considering the image width (21.95mm nominal) based on the maximum reduction ratio of 2.15:1 prescribed for the step optical printing of 35mm film. The same indiscriminate principle is employed for reductions from 35mm or 16mm onto Super 8mm film — for anamorphic as well as standard images.

However, when anamorphic images on 35mm or larger film, such as those of the CinemaScope and Panavision filming and projection system are reduced for 16mm film with the prescribed maximum reduction ratio of 2.15:1, as much as 14% of the image height is lost, this loss increasing to 18% when the image is finally projected.

According to the present ANSI Specifications, the camera apertures or film gates for standard images have a nominal width of 10.26mm and $7.49mm_{-0.07}^{+0.10}$ height for 16mm film and 5.79mm reference width and 4.14mm minimum height for Super 8mm film. This standard has been adopted internationally for cameras for recording non-anamorphic images. If the same cameras were used for anamorphic filming with a compression ratio of 2:1 on reversal film stock which is commonly used in 16mm and Super 8 cameras, the resulting anamorphic images would show considerable departures from the established aspect ratio of 1.18:1 for camera film gates and about 1.20:1 for projector film gates with 35mm cine film. The same applies to the established aspect ratio of 2.35:1 for the masked image projected from 35mm cine film.

If conventional 16mm and Super 8 cameras were to be used for anamorphic filming, the aspect ratio would be quite unsuitable, as is shown in Table 1, where the figures in parenthesis are twice the approximate width because of the anamorphotic effect.

TABLE 1

| According to ANSI Specifications for | | Aspect ratios of existing anamorphic cine cameras | Camera images if used with existing cine projectors (anamorphic ratios) |
|---|---|---|---|
| 35 mm anamorphic | size in mm w : h | 21.95 x 18.59 1.18 (2.36) : 1 | 21.29 (x2) x 17.78 2.40* (2.395) : 1 |
| 16 mm | size in mm w : h | 10.26 x 7.49 1.37 (2.74) : 1 | 9.65 (x2) x 7.26 (2.66) : 1 |
| Super 8 | size in mm w : h | 5.79 x 4.14 1.40 (2.80) : 1 | 5.31 (x2) x 4.01 (2.65) : 1 |

* To be masked with a masking border on the projection screen with an aspect ratio of 2.35 : 1 (ANSI PH 22.106—1971).

It will be evident that the inevitable departures of the aspect ratios of the finally projected anamorphic images are far too large to be acceptable. Further, if all the recorded information is to be reproduced, enlargement to 35mm from an anamorphic Super 8 or 16mm image of these aspect ratios would be impossible.

Prior German Specification 1,931,828 discusses the problem of image sizes and mentions that, owing to the reduction in size, the height of the images on 16mm and 8mm film would be too small; poor utilization of the available film material on 16mm and 8mm film is inevitable for wide-screen cinematography unless, for example in the case of 8mm, one uses a double 8mm film so that the space available for two juxtaposed images is exposed and later projected simultaneously, whereby one obtains double the image width but the height remains unaltered. If one were to follow the teachings of this prior Specification, the resulting aspect ratio would be an impossible 3:1 as compared with 1.85:1 accepted in the U.S.A. and 1.75:1 in Europe. Also, the Specification fails to consider the problems connected with anamorphic camera and projector images for 16mm and Super 8mm.

It is an aim of the present invention to solve the problem hitherto encountered in connection with the anamorphic image sizes on 16mm and Super 8mm cine film, so that images can be faithfully recorded with substantially no loss of information. It is a further aim to enable the reduction of anamorphic images from 35mm or larger to 16mm or Super 8mm film and, conversely, enlargement onto 35mm or larger without substantial loss. Yet another aim is to enable the aforementioned to be achieved with existing film cameras, projectors, reduction printers and contact printers, as the case may be, without requiring this equipment to be modified or, at most, with only minor adaptations.

According to the present invention, the carrier material is provided at both sides of each anamorphic image, or both sides of the rectangular area in which the image is to be received, with a blank strip which extends over the full height of the image or image-receiving area and is transparent in the case of a negative carrier, opaque for a positive carrier, the strip adjacent each image or image-receiving area being positioned such that, when the carrier is projected onto a cine screen, the strips will fall on the masking border bounding the screen and the projected image between the projected strips will have an aspect ratio of 2.35:1.

In the case of reductions to the next film stock size or a still smaller size, one may use a fixed linear reduction ratio or divisor and, conversely, for enlargement from the smallest size of film stock or from the next smaller size one can use the same fixed ratio as a multiplier so that anamorphic images recorded on smaller sizes of film stock will, when enlarged to 35mm, produce the identical original image projected onto a wide-screen.

One embodiment of the invention makes it possible for the blank strips on both sides of the anamorphic image to be exposed before or after the anamorphic image is itself exposed. This could be of advantage during subsequent copying of the film by reduction printing. However, it is also possible to expose the blank strips simultaneously with the exposure of the anamorphic image itself.

If the gate of a 16mm or Super 8mm camera is reduced in width, the required blank strips will be automatically produced on the original reversal film stock during filming. In cases where negative carrier material is to be used for such cameras, the blank strips will have to be exposed either before or after exposure of the anamorphic images.

The invention has been developed from the analysis and determination of anamorphic sizes according to the guidelines given by existing standard Specifications for standard 35mm, 16mm and

**0 003 631**

Super 8mm cameras and projectors so that this standard equipment will be usable for new anamorphic sizes. As explained above, whereas hitherto all film laboratories have used the only existing standard which is based on the image width, namely a reduction ratio 21.95mm:10.21 = 2.15, which was in any case intended only for reduction from 35mm to 16mm film stock, the invention uses only the height of the image as a basis for arriving at the reduction ratio. As a result, the hitherto unavailable anamorphic images on film stock smaller than 35mm will have the same aspect ratio as the camera gate and the aspect ratio of the projected image will, apart from negligible differences, be the same regardless of the aspect ratios established for the standard 35mm, 16mm and Super 8mm projector gates.

The following Tables show the aspect ratios and the divisor departures, Table 2 giving the data for the camera and Table 3 giving the data for the projector.

TABLE 2

| Film image size | | Aspect ratios for camera or for positive images as per | | Departure from the divisors for image reductions as per | |
|---|---|---|---|---|---|
| | | ANSI | Invention | ANSI | Invention |
| Standard non anamorphic | 35 mm | 1.3719 : 1 | not applicable | not applicable | not applicable |
| | 16 mm | 1.3698 : 1 | not applicable | 35/16 −0.0021 | not applicable |
| | Super 8 mm | 1.3986 : 1 | not applicable | 35/S8 +0.0267 16/S8 +0.0288 | not applicable |
| Anamorphic | 35 mm | 1.18074 : 1 | not applicable | not applicable | not applicable |
| | 16 mm | not applicable | 1.18074 : 1 | not applicable | 35/16 −0.0000 |
| | Super 8 mm | not applicable | 1.18074 : 1 | not applicable | 35/S8 +0.0000 16/S8 +0.0000 |

4

TABLE 3

| Film image size | | Projector gate aspect ratios as per | | Departure from the divisors for projector gate reductions as per | |
|---|---|---|---|---|---|
| | | ANSI | Invention | ANSI | Invention |
| Standard non anamor- phic | 35 mm | 1.3708 : 1 | not applicable | not applicable | not applicable |
| | 16 mm | 1.3292 : 1 | not applicable | 35/16 −0.0416 | not applicable |
| | Super 8 mm | 1.3242 : 1 | not applicable | 35/S8 −0.0466 16/S8 −0.0050 | not applicable |
| Anamor- phic | 35 mm | 1.19735 (x2) | not applicable | not applicable | not applicable |
| | 16 mm | not applicable | 1.2181 (x2) : 1 | not applicable | 35/16 +0.02065 |
| | Super 8 mm | not applicable | 1.2190 (x2) : 1 | not applicable | 35/S8 +0.02165 16/S8 +0.0009 |

By employing a larger reduction factor than is conventional, the invention permits transfer of all the original information from the anamorphic image onto an image-receiving area that is slightly narrower, whereby substantially no image loss will occur. In addition, existing cameras and reduction printers for cine film need not be reconstructed, the only modification being the addition of a very simple mask. The same advantages make themselves evident when enlarging anamorphic images from 16mm or Super 8mm.

Reduced anamorphic images produced in accordance with the present invention will, when projected, fit perfectly within the masking border provided around projection screens and having an aspect ratio of 2.35:1. Should there be any slight departures, these will be undetectable because they are completely absorbed by the masking border. It is a particular advantage of the invention that one and the same aspect ratio is applicable on the camera side when the image is compressed for recording onto the film stock and again on the projector side when there is expansion to an image of the original proportions. These aspect ratios for anamorphic images are more favourable than the standardized aspect ratios for standard (non-anamorphic) 16mm and Super 8 film stock.

One example of a suitable apparatus for performing the method of the invention employs an exposure mask containing two spaced parallel slots through which light can pass. The width of the opaque space between the slots is equal to the width of the anamorphic image and the slots are at least coterminous with the image height. Optionally, one can employ a roll of film which is opaque across the width of the anamorphic image and, on both sides thereof, contains two parallel sets of slots which are coterminous with the image height or two continuous slots. The length of the uninterrupted slots need only be such that, when the film is transported, the blank strips exposed through the slots will have a height equal to the image height. One will generally make the slot in the masking film so long that the exposure will produce blank marginal strips which are continuous in the finally developed film.

For anamorphic filming with 16mm or Super 8mm cine cameras, the invention provides for the use of a film gate that is reduced in width from 10.26mm to 8.84mm and from 5.79mm to 4.89mm, respectively. With this variation, the blank strips adjacent the anamorphic images will be obtained automatically.

In reduction printing of the anamorphic images, it is preferred to place an additional printing head adjacent the 16mm or Super 8mm printing head, so that the anamorphic image reductions and the required blank strips can be obtained in one operation without the need for masking the 35mm gate of the reduction printer.

The roll of masking film or any other suitable exposure mask should have an opaque area of a size equal to that of the anamorphic image, namely 7.49mm x 8.84mm with slots or transparent portions each 0.71mm wide for 16mm film stock and an opaque area of 4.14mm x 4.89mm with slots or transparent areas each 0.45mm wide for Super 8mm.

The invention will now be described in more detail with reference to the accompanying drawing wherein:

Fig. 1a shows the standard image areas prescribed by ANSI for 35mm, 16mm and Super 8mm film stock,

Fig. 1b illustrates the image areas obtained on 16mm and Super 8mm film stock when the non-anamorphic images are reduced from 35mm film using the prescribed reduction ratio of 2.15:1,

Fig. 2 shows the recommended anamorphic image area for 35mm film stock and, thereunder, the anamorphic image areas that would be obtained by reduction therefrom when using the recommended reduction ratio of 2.15:1,

Fig. 3 shows the anamorphic image area on 35mm film stock and, beneath this, the anamorphic image areas as obtained on 16mm and Super 8mm film stock when employing the method of the invention,

Fig. 4 is an enlarged fragmentary view of a length of film on which anamorphic images have been produced in accordance with the invention either directly when filming with a camera or by way of reduction when copying from larger film stock,

Fig. 5 is a front elevation of a masking unit for use with the invention,

Fig. 6 is a section take on the line 6—6 in Fig. 5,

Fig. 7 is a plan view of a mask for use on the film either before or after the anamorphic images have been recorded,

Fig. 8 shows standard (non-anamorphic) film gates for 16mm and Super 8mm film (left-hand side) and the modified film gate dimensions when the anamorphic images are to be produced according to the invention (right-hand side).

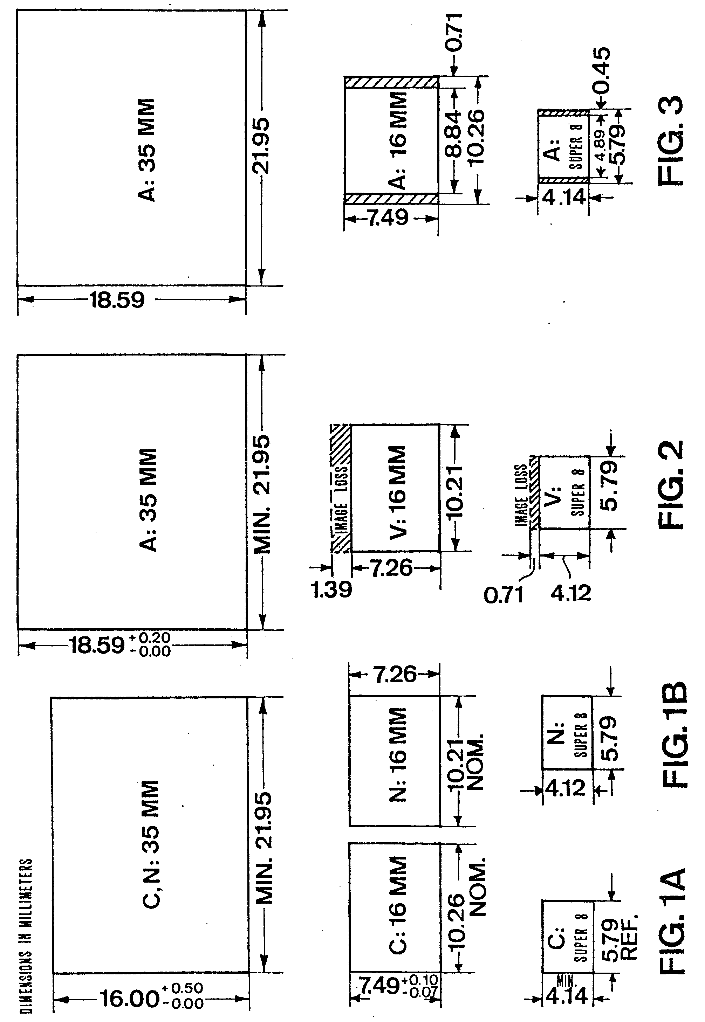

Referring to Fig. 1a, this shows conventional camera gates areas C as recommended by ANSI for 35mm, 16mm and Super 8mm film stock on which standard (non-anamorphic) images are to be recorded by direct filming with the camera. If a standard image produced by the gate C on 35mm stock and represented by the letter N in the top illustration of Fig. 1a is to be recorded on 16mm or Super 8mm stock by a reduction process, with a recommended reduction ratio of 2.15:1 being employed, the resulting standard reduced images will have areas as shown in Fig. 1b (cf. table 4 for 35/S8 reductions).

Fig. 2 shows the recommended film gate area A for producing anamorphic images on 35mm film. If the recommended maximum reduction ratio of 2.15:1 is now used to produce anamorphic images V on 16mm and Super 8mm film stock, respectively, by a reduction printing process, it will be seen that there is a marked loss in the image height in each case, the losses being indicated by the cross hatched area and amounting to 14% of the original image height.

The diagrams in Fig. 3 illustrate the advantages achieved by the method according to the invention.

Starting with the recommended dimensions for an anamorphic image area A on 35mm film stock, a different reduction ratio is employed so that the height of the anamorphic images reduced onto 16mm and Super 8mm film stock is not less than the heights of the film gates for 16mm and Super 8mm cameras shown in Fig. 1a. In other words, the full height of the anamorphic image is reproduced, blank strips being provided on each side of the image to be transparent on negative film stock and opaque for positive film stock. These blank strips can be obtained automatically if the camera gate is made slightly narrower. It is important to note in connection with Fig. 3 that the cross-hatched areas indicating the blank strips adjacent the anamorphic images A on the 16mm and Super 8mm film do not represent losses in the image width. Simple calculation will show that retention of all the information in the image height in Fig. 3 (in contrast with the loss in Fig. 2) is not obtained by sacrificing some of the width of the reduced anamorphic images. Consequently, when the reduced images are projected onto a screen with the aid of a projector having an anamorphic system of lenses, mirrors or prisms, all the information contained in the original anamorphic image on the 35mm stock will be viable on the projection screen.

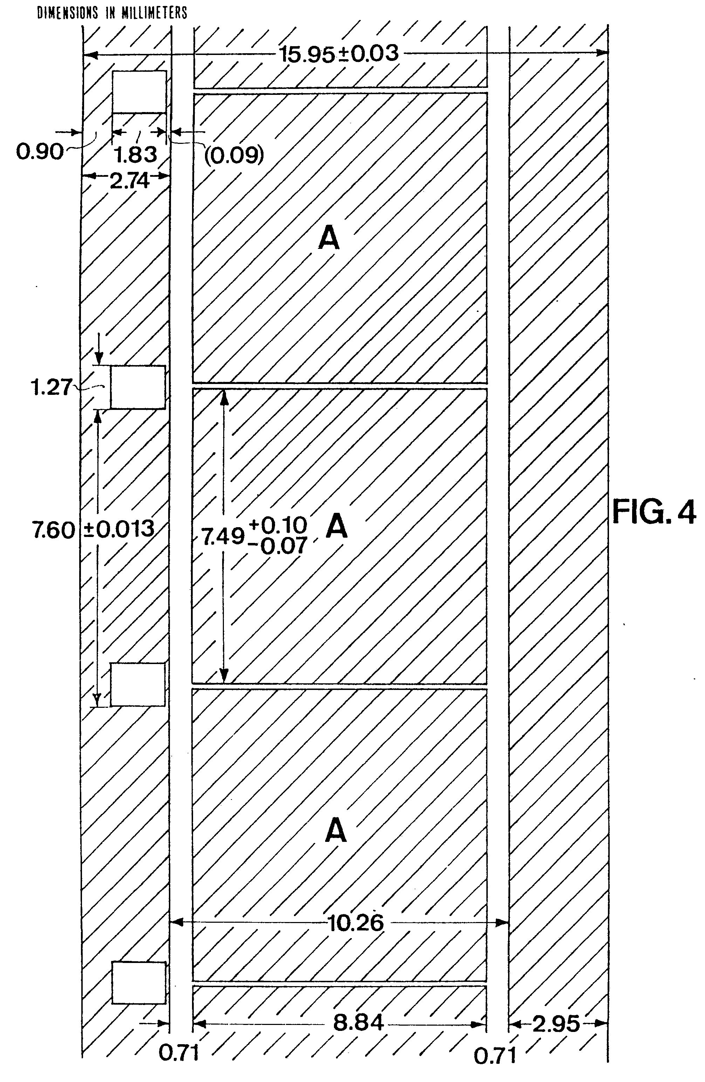

Fig. 4 shows a fragment of 16mm film stock obtained by reducing 35mm anamorphic cine film. It will be seen again that all of the original anamorphic image A has been reproduced. At the sides of the reduced anamorphic images, there are continuous blank strips which are each 0.71mm wide and are transparent in the case of a negative film or opaque for a positive film. One margin of the film contains rectangular perforations which are used to co-operate with the feeding mechanism for the film and which do not overlap onto the adjoining blank strip.

The invention embraces the use of 35mm intermediate positives for producing 16mm or Super 8mm intermediate negatives by a reduction process with transparent blank strips being automatically provided adjacent the images or opaque blank strips in the case of reversal film. Positive prints are obtained from the intermediate negatives by contact or reduction printing. The width of the blank strips is 0.71mm for 16mm film stock and 0.45mm for Super 8mm film stock.

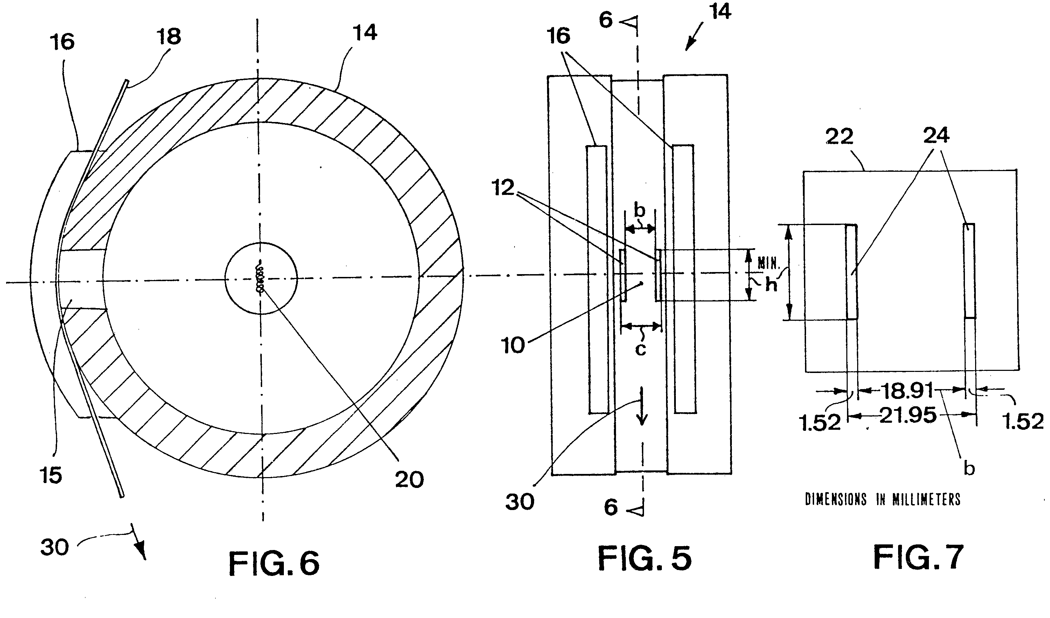

Referring to Figs. 5 and 6, a printing head 14 contains an opaque mask 10 having slots 12 spaced transversely of the direction 30 of travel of the film 18. The film 18 passes through film guides 16 and over the two slots 12 provided in the mask 10. The slots 12 are spaced apart by the width b of the

6

anamorphic image or image-receiving area, which therefore remains unexposed. The length of each slot 12 is at least equal to and preferably longer than the height of the anamorphic image or image-receiving area. The part of the film 18 that is not exposed across the width b may already contain anamorphic images or may subsequently be exposed by reduction from 35mm film. As will be evident from Fig. 6, the interior of the printing head 14 contains an exciter or lamp 20 for projecting light through an aperture 15 onto the slots 12 of the mask 10 and thus onto the passing film 18.

The exposure mask 10 in the example of Figs. 5 and 6 may be integral with the printing head 14 and consist of metal or other suitable material in a black matt finish so as to avoid reflections.

Fig. 7 shows a separately made mask 22 for placing in the gate of a 35mm printer. This mask again contains two parallel spaced slots 24 which define between them the width b of the anamorphic image area, required when reduced on to smaller sizes of film, the length of the slots being at least equal to the height h of the image whereas their width is such that twice the width of the slots 24 plus the dimension b is at least equal to the width of a standard non-anamorphic image. The other requirement of such an inlay mask 22 is that it will fit exactly into the 35mm printer gate of the reduction printer. The usual reduction factor of the printer (2.1394:1 for reducing from 35mm onto 16mm in the present case) can then be employed to expose the superfluous width of a 16mm reversal negative either before or after the anamorphic image is exposed. For exposing the anamorphic image by reduction from 35mm onto 16mm film stock, the reduction ratio of the printer is adjusted to obtain the required ratio of 18.59mm:7.49mm = 2.4820:1. For reduction printing from 35mm onto Super 8mm film stock, the reduction ratio is set to 18.59:4.14mm = 4.4903:1.

It is important to note that reductions of anamorphic images from 35mm or larger stock onto 16mm colour reversal intermediates or onto Super 8mm should preferably be made from the original anamorphic negative so as to keep optical disadvantages to a minimum. Standard (non-anamorphic) final positive images on 16mm or Super 8mm are projected with an aspect ratio of 1.33:1 whereas the projected images is about 2.40:1 (covered by the masking borders on the projection screen to give an aspect ratio of 2.35:1). In the case of a 16mm standard positive, the image width is about 10.26mm nominal and for an anamorphic positive image in accordance with the invention the nominal width is 17.68 (8.84mm × 2) when projected onto the screen after the compression factor of 2:1 has been reversed by the anamorphic system of the projector, giving a total projected width of 2 × 9.65mm = 19.30mm if the projected part of the blank strip on both sides of the image are included. Doubling the width of the projected anamorphic image as compared with the case when standard (non-anamorphic) images are projected causes the grain of the film to be distorted from circular to oval shape. Best results are therefore obtained, particularly in the case of the very small width of 4.8883mm of an anamorphic image on Super 8mm stock, if the positives are as close as possible to the original negatives. One can then obtain 16mm or Super 8mm reduction negatives or positives of first generation from the original 35mm negative, or 16mm or Super 8mm negatives or positives of second generation from the first generation materials. In the reduction of anamorphic images one should not depart from the original by more than prints of the third generation. Reductions from anamorphic 35mm or 16mm release prints will give poor results and should therefore be avoided.

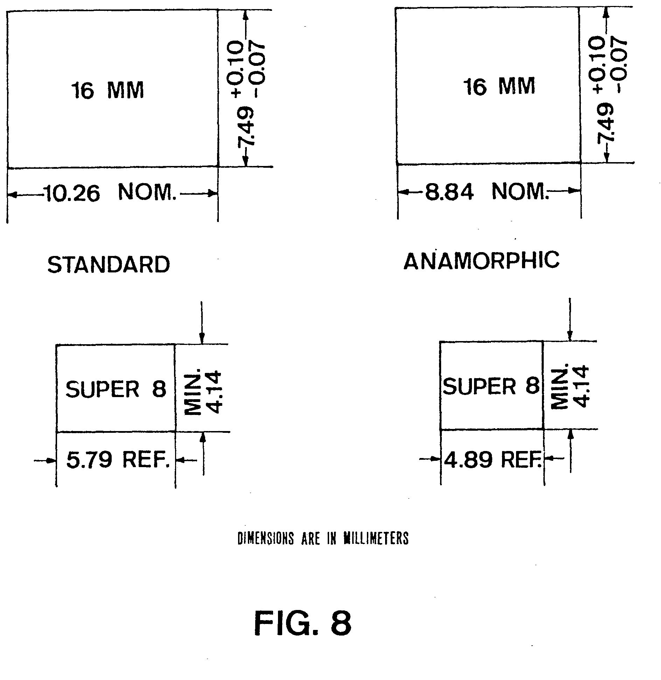

Fig. 8 shows the differences in width for the film gates of 16mm and Super 8mm cameras used to record standard (non-anamorphic) images (left-hand side) and the equivalent gates (right-hand side) of cameras equipped with anamorphotic systems having a compression ratio of 2:1. The narrower width of the film gates for anamorphic recording can be brought about by replacing the gates or by providing the camera with a gate of which the width can be adjusted from one size to the other, the height remaining unchanged, whereby one and the same camera can be selectively used for recording standard or anamorphic images. Although such adaptation of the camera will probably have to be carried out by a camera manufacturer, the expense is more than offset by the fact that, when cameras with the narrower film gate are loaded with conventional reversal film, the developed film will automatically have the required opaque blank strips adjacent the anamorphic images.

It will of course be realized that, as soon as the film manufacturers make available 16mm and Super 8mm reversal film having the required blank strips produced on them in accordance with the present invention, it will not be necessary to make any change to the presently available film gates of cameras nor to the reduction printers.

The following Table 4 lists various standardized gate sizes for non-anamorphic cameras and the loss in image height that would result from anamorphic image reductions from originals taken through these camera gates. As a comparison, the Table includes the dimensions of anamorphic image reductions obtained without substantial loss in accordance with the present invention and the width of the additional blank vertical strips that are required. The Table includes the reduction factors which are either recommended or deduced from the recommendations and, in the case of the invention, the fixed reduction factors used as divisors, which can also be applied as multiplication factors in the case of enlargements.

TABLE 4

COMPARISON FOR ANAMORPHIC APPLICATIONS IN REDUCTION

| | STATE OF THE ART | | INVENTION | |
|---|---|---|---|---|
| | Standardized non anamorphic size N h x w (1) anamor- phically reduced | Loss in anamorphic height $-\Delta h$ | Anamorphic size (A for 16 mm / & Super 8) h x w (2) | Width of blank strips $+\Delta w = w(1) - w(2)$ |
| 35 mm | 16.00 x 21.95 (anamorphic 18.59 x 21.95) | not applicable | 18.59 x 21.95 (ANSI PH 22-59— Febr.'74) | not applicable (N) |
| R 35 mm / 16 mm | = 2.150 max. (RP) (2.1362 RS) | | = 2.4820 (A) | |
| 16 mm | 7.44 x 10.21 | 1.21 | 7.49 x 8.84 (35) | 2 x 0.71 (A) |
| R 16 mm / S8 | = 1.7634 | (⁻/_ 14%) | = 1.8092 (A) | |
| Super 8 mm | 4.22 x 5.79 | 0.68 | 4.14 x 4.89 (4.8883) | 2 x 0.45 (A) |
| R 35 mm / S8 | = 3.7910 (3.8647 RS) | (⁻/_ 14%) | = 4.4903 (A) | |

N.B. : All sizes are in millimeters.

N = standardized size
h = image height
w = image width
R = reduction ratio
A = INVENTION
RP = approved Recommended Practice RP 65 June 1976 SMPTE
RS = Reduction Ratio for masking purposes according to the invention

## Claims

1. A method of recording anamorphic images on a carrier material such as cine film by fiming with a camera or by reduction printing from film stock of larger size or by enlargement onto larger film stock, characterised in that the carrier material is provided at both sides of each anamorphic image or both sides of the rectangular area in which the image is to be received, with a blank strip which extends over the full height of the image or image-receiving area and is transparent in the case of a negative carrier and opaque for a positive carrier, the strips adjacent each image or image-receiving area being positioned such that, when the carrier is projected onto a cine screen, the strips will fall on the masking border bounding the screen and the projected image between the projected strips will have an aspect ratio of 2.35:1.

2. A method according to claim 1 wherein fixed linear reduction factors are used as divisors for reductions from each film stock size to the next lower size of film stock, and the same respective factors are used as multipliers for enlargements.

3. A method according to claim 1 or claim 2, wherein the blank strips are produced on the film stock by pre-exposing same while the image receiving area is masked.

4. A method according to claim 1 or claim 2, wherein the blank strips on the film stock are produced by exposure to light after the anamorphic images has been filmed, printed, reduced or enlarged.

5. A method according to claim 1 applied to reduction printing of anamorphic images from 35mm negative film stock to 16mm film stock or from 16mm film stock to Super 8mm film stock, wherein the image height is reduced to 7.49mm and 4.14mm, respectively, and the width to 8.84mm and 4.89mm.

respectively, the width of each transparent strip being a minimum of 0.71mm and a minimum of 0.45mm, respectively.

6. A method according to claim 1 applied to reduction printing, wherein a masking unit or a masked 35mm film loop to be guided over the feed sprockets is placed in the 35mm printer head of a reduction printer to produce the blank transparent strips while a 16mm or Super 8mm negative film stock is being exposed.

7. A method according to claim 1, wherein the blank strips are formed by a masking unit with the dimensions for a 16mm printer head, the mask containing two slots which are each at least 7.49mm long and 0.71mm wide and an opaque mask area between the slots fitting precisely into the 16mm printer head and having a width of 8.84mm for contact printing by exposing a 16mm negative film stock and for reduction printing onto Super 8mm negative film stock.

8. A method according to claim 1 for obtaining negative or positive anamorphic images reduced onto 16mm film stock by using an additional printing head (e.g. 14) on the 16mm part of a reduction printer, wherein use is made of an exposure mask (e.g. 10) provided with two parallel slots (e.g. 21) for exposing said blank strips simultaneously with producing the reduced anamorphic images.

9. A method according to claim 8 wherein said exposure mask (e.g. 10) and printing head (e.g. 14) form a single unit.

10. A method according to claim 1 applied to reduction printing with a reduction ratio of 2.4820:1 or 4.4903:1 onto 16mm or Super 8mm negative film stock, respectively, wherein an intermediate 35mm positive film stock with anamorphic images is placed in the 35mm part of an adjustable reduction printer, whereby said blank strips will be produced automatically.

11. A method according to claim 1 wherein said opaque blank strips are produced during filming with cameras using 16mm or Super 8mm cine reversal film by reducing the width of the film gate in the camera from the standard 10.26mm or 5.79mm to 8.84mm or 4.89mm, respectively.

12. A method according to claim 11, wherein the film gate width reduction is obtained with the aid of a removable inlay mask which is inserted in the gate manually or mechanically and/or electrically.

13. Cinematographic 16mm or Super 8mm film stock for carrying out the method of claim 1 characterised in that the film stock is unexposed except for parallel strips extending lengthwise of the film and spaced apart to define an anamorphic image-receiving area.

14. Exposed cinematographic film produced by the method of any one of claims 1 to 12.

## Revendications

1. Une méthode d'enregistrement des images anamorphosées sur un support tel que film cinématographique pour prises de vues soit avec une caméra, soit par tirage par réduction ou agrandissement du film cinématographique d'un format plus large; caractérisée par le fait que le support est fourni, des deux cotés de chaque image anamorphosée, ou des deux cotés de la surface rectangulaire dans laquelle l'image doit être enregistrée, avec une bande transparante ou opaque qui se trouve sur la hauteur totale de l'image ou de la surface dans laquelle l'image doit être enregistrée; cette bands est transparante pour un support négatif et opaque pour un support positif, les bandes à coté de chaque image ou de chaque surface dans laquelle l'image doit être enregistrée seront placées de telle manière que, lorsque le support sera projeté sur un écran cinéma, ces bandes correspondront aux masques noirs entourant l'écran et l'image projetée aura un rapport largeur/hauteur de 2.35:1.

2. Une méthode selon revendication 1 dans laquelle des facteurs de réduction linéaires constants sont utilisés comme diviseurs pour des réductions de chaque format de films cinématographiques sur le format suivant plus petit; les mêmes facteurs seront utilisés comme facteurs de multiplication pour l'agrandissement.

3. Une méthode selon revendication 1 ou 2 dans laquelle les bandes transparentes ou opaques ont été produites sur un film cinématographique par pré-exposition à la lumière tandis que la surface sur laquelle l'image doit être enregistrée restera masquée.

4. Une méthode selon revendication 1 ou 2 dans laquelle les bandes transparentes ou opaques sur un film cinématographique ont été produites par post-exposition à la lumière après que les images anamorphosées ont été enregistrées, tirées, reduites ou agrandies.

5. Une méthode selon revendication 1 appliquée au tirage par réduction des images anamorphosées obtenues à partir du film 35mm négatif sur film 16mm ou du film format 16mm sur film Super 8mm dans laquelle la hauteur de l'image est réduite respectivement à 7,49mm et 4,14mm et la largeur respectivement à 8,84mm et 4,89mm tandis que la largeur de chaque bande transparente aura une largeur minimale respectivement de 0,71mm et 0,45mm.

6. Une méthode selon revendication 1 appliquée au tirage par réduction, dans laquelle un masque ou une bande continue de film cinématographique 35mm masquée est placée sur les galets dentés de transport de film dans la tête de tirage 35mm d'une tireuse cinématographique par réduction afin de produire les bandes transparentes en même temps que le film négatif de format 16mm ou de format Super 8mm sera exposé.

7. Une méthode selon revendication 1 dans laquelle les bandes transparentes ou opaques sont produites par un masque ayant les dimensions d'une tête de tireuse 16mm, pour les tirages par contact ou par réduction, le masque ayant deux rainures, chacune d'une longueur minimale de 7,49mm et d'une largeur de 0,71mm et une surface de masque opaque entre ces deux rainures disposées précisément dans la tête de tireuse 16mm et ayant une largeur de 8,84mm pour les tirages par contact des films négatifs 16mm et pour les tirages par réduction sur des films négatifs de format Super 8mm.

8. Une méthode selon revendication 1 pour obtenir des images anamorphosées négatives ou positives réduites sur du film cinématographique de format 16mm en utilisant une tête de tirage additionelle (p.e. 14) sur la partie 16mm d'une tireuse par réduction dans laquelle on utilise un masque d'exposition (p.e. 10) ayant deux rainures parallèles (p.e. 21) pour exposer les bandes mentionnées en même temps que les images anamorphosées réduites.

9. Une méthode selon revendication 8 dans laquelle le masque d'exposition (p.e. 10) et la tête de la tireuse (p.e. 14) forment un seul dispositif.

10. Une méthode selon revendication 1 appliquée au tirage par réduction avec un rapport de réduction de 2,4820:1 ou de 4,4903:1 respectivement sur film cinématographique négatif de format 16mm ou Super 8mm, dans laquelle un film cinématographique interpositif 35mm (35mm intermediate positive) impressionné avec des images anamorphosées a été placé dans la partie 35mm d'une tireuse convertible par réduction tandis que les bandes mentionnées seront obtenues automatiquement.

11. Une méthode selon revendication 1 dans laquelle les dites bandes opaques seront produites pendant les prises de vues avec une caméra en utilisant des films cinématographiques inversibles en 16mm ou en Super 8mm par le réduction de la largeur de la fenêtre d'image dans la caméra du format standard de 10,26mm ou 5,79mm respectivement au format de 8,84mm ou 4,89mm respectivement.

12. Une méthode selon revendication 11 dans laquelle la largeur réduite de la fenêtre d'image est obtenue par un cache amovible qui est placé dans la fenêtre d'image soit manuellement, mécaniquement et/ou électriquement.

13. Matériel cinématographique du format 16mm ou Super 8mm pour réalisation de la méthode selon revendication 1 caractérisé par les propriétés que ce matériau n'est pas exposé à la lumière sauf pour les bandes parallèles se trouvant sur la longueur du film et qui sont espacées de façon à fournir une surface permettant l'enregistrement de l'image anamorphosée.

14. Film cinématographique exposé et produit par une des méthodes des revendications 1 à 12.

## Patentansprüche

1. Verfahren zur Festlegung anamorphotischer Bilder auf einem Trägermaterial wie Kinofilm durch Aufnahme mit einer Kamera bezw. durch Verkleinerung von Kinofilmen grösseren Formates dadurch gekennzeichnet, dass das Trägermaterial zu beiden Seiten von jedem anamorphotischen Bild, bezw. beidseitig der Fläche, worin das Bild festzulegen ist, mit einem Seitenstreifen ohne Bild versehen ist und sich der Seitenstreifen über die volle Höhe des Bildes oder über die Fläche des festzulegenden Bildes erstreckt und transparent, d.h. lichtdurchlässig im Falle eines Negatives ist und schwarz, d.h. lichtundurchlässig im Falle eines Positives ist, wobei die Seitenstreifen beidseitig jedes Bildes oder der Fläche worin das Bild festzulegen ist derartig angebracht worden sind, dass, wenn das Trägermaterial auf eine Bildwand projiziert wird, diese Seitenstreifen vom schwarzen Rand (Masking Border) der Projektionswand absorbiert werden und das projizierte Bild zwischen den projizierten Seitenstreifen ein Bildseitenverhältnis von 2,35:1 zeigt.

2. Verfahren nach Anspruch 1, wobei definierte, lineare Verkleinerungsfaktoren als Divisor für die Verkleinerung von jedem Filmformat auf das nächst kleinere Format und umgekehrt bei Vergrösserungen die gleichen Faktoren als Vergrösserungsfaktoren benutzt werden.

3. Verfahren nach Anspruch 1 und 2, wobei die Seitenstreifen auf dem Filmmaterial durch Vorbelichtung erzielt werden während die Fläche, worauf das Bild zu belichten ist, abgedeckt wird und unbelichtet bleibt.

4. Verfahren nach Anspruch 1 und 2, wobei die Seitenstreifen auf dem Filmmaterial durch Belichtung mit einer Lichtquelle erzielt werden, nachdem das anamorphotische Bild entweder aufgenommen, kopiert, verkleinert oder vergrössert worden ist.

5. Verfahren nach Anspruch 1 abgestimmt auf den Verkleinerungsdruck von anamorphotischen Bildern von 35mm kinematographischen Negativefilmen auf 16mm Filmmaterial oder vom 16mm Filmmaterial auf Super 8mm Filmmaterial, wobei die Bildhöhe auf 7,49mm bezw. auf 4,14mm verkleinert wird und die Bildbreite auf 8,84mm bezw. auf 4,89mm und die Breite der lichtdurchlässigen Seitenstreifen minimal 0,71mm bezw. minimal 0,45mm betragen wird.

6. Verfahren nach Anspruch 1 abgestimmt auf den Verkleinerungsdruck unter Verwendung einer Belichtungsmaske oder einer maskierten 35mm Filmschleife, die über die gezähnten Transportrollen in den 35mm Belichtungskopf eines Reduktionsprinters geführt wird, wodurch, während der 16mm oder Super 8mm Negativfilm belichtet wird, die lichtdurchlässigen Seitenstreifen gebildet werden.

7. Verfahren nach Anspruch 1 wobei die Seitenstreifen durch eine Maske gebildet werden mit den Abmessungen für einen 16mm Belichtungskopf, wobei diese Maske zwei Seitenschlitze hat, jeder wenigstens 7,49mm lang und 0,71mm breit und eine zwischen den beiden Schlitzen befindliche, lichtundurchlässige Fläche, genau im 16mm Belichtungskopf passend mit einer Breite von 8,84mm für Kontaktdruck wenn ein 16mm Negativfilm und für Verkleinerungsdruck wenn ein Super 8mm Negativ film belichtet wird.

8. Verfahren nach Anspruch 1 für die Herstellung von negativen oder positiven anamorphotischen Bildern verkleinert auf 16mm Filmmaterial durch Verwendung eines additionellen Belichtungskopfes (wie z.B. 14) auf dem 16mm Teil des Reduktionsprinters wobei eine Belichtungsmaske (wie z.B. 10) mit zwei parallelen lichtdurchlässigen Schlitzen (wie z.B. 21) für Belichtung der genannten Seitenstreifen Verwendung findet gleichzeitig bei Herstellung der verkleinerten anamorphotischen Bildern.

9. Verfahren nach Anspruch 8 wobei genannte Belichtungsmaske (wie z.B. 10) mit dem zusätzlichen Printbelichtungskopf (wie z.B. 14) eine Einheit bildet.

10. Verfahren nach Anspruch 1 abgestimmt auf Verkleinerungen mit einem Verkleinerungsfaktor von 2,4820:1 oder 4,4903:1 auf 16mm bezw. Super 8mm kinematographisches, negatives Filmmaterial wobei ein sogenanntes 'intermediate' 35mm Positiv mit anamorphotischen Bildern versehen im 35mm Teil des nachstellbaren Reduktionsprinters eingeführt wird und wobei die genannten lichtdurchlässigen Seitenstreifen automatisch erzeugt werden.

11. Verfahren nach Anspruch 1 wobei die genannten lichtundurchlässigen Seitenstreifen während der Aufnahme mit Kameras, worin 16mm oder Super 8mm Kinoumkehrfilme verwendet werden, erzeugt werden durch Verkleinerung der Breite des Filmfensters in der Kamera von der Standardbreite 10,26mm bezw. 5,79mm auf 8,84mm bezw. 4,89mm.

12. Verfahren nach Anspruch 11 wobei die Verkleinerung der Breite des Filmfensters durch eine abnehmbare Einlegemaske vorgenommen wird, die entweder manuell, mechanisch und/oder elektrisch eingeführt wird.

13. Kinematographisches 16mm oder Super 8mm Filmmaterial zur Gewinnung des Verfahrens nach Anspruch 1 dadurch gekennzeichnet, dass das Filmmaterial unbelichtet ist mit Ausnahme der parallelen Seitenstreifen, die sich über die gesamte Länge des Filmes erstrecken und derartig auseinander liegen, dass die anamorphotische Bildaufnahmefläche übrig bleibt.

14. Belichteter kinematographischer Film hergestellt nach dem Verfahren der Ansprüche 1 bis 12.

DIMENSIONS IN MILLIMETERS

C,N: 35 MM
16.00 +0.50 -0.00
MIN. 21.95

A: 35 MM
18.59 +0.20 -0.00
MIN. 21.95

A: 35 MM
18.59
21.95

0 003 631

C: 16 MM
7.49 +0.10 -0.07
10.26
NOM.

N: 16 MM
7.26
10.21
NOM.

IMAGE LOSS
1.39
V: 16 MM
7.26
10.21

A: 16 MM
7.49
8.84
0.71
10.26

C: SUPER 8
MIN. 4.14
5.79
REF.

N: SUPER 8
4.12
5.79

IMAGE LOSS
0.71
4.12
V: SUPER 8
5.79

A: SUPER 8
4.14
4.89
0.45
5.79

FIG. 1A      FIG. 1B      FIG. 2      FIG. 3

DIMENSIONS IN MILLIMETERS

0 003 631

FIG. 4

FIG. 6

FIG. 5

FIG. 7

DIMENSIONS IN MILLIMETERS

0 003 631

16 MM

7.49 $^{+0.10}_{-0.07}$

10.26 NOM.

**STANDARD**

16 MM

7.49 $^{+0.10}_{-0.07}$

8.84 NOM.

**ANAMORPHIC**

SUPER 8

MIN. 4.14

5.79 REF.

SUPER 8

MIN. 4.14

4.89 REF.

DIMENSIONS ARE IN MILLIMETERS

# FIG. 8

4